# EUROPEAN PATENT APPLICATION

(11) **EP 1 770 668 A2**
(43) Date of publication of application: **04.04.2007**
(21) Application number: 06020483.1
(22) Date of filing: 28.09.2006
(51) Int. Cl.: G08C 17/02

(54) **RF-Network sensor system and method**

(30) Priority: 30.09.2005 US 241020
(71) Applicant: Rockwell Automation Technologies, Inc., Mayfield Heights, OH 44124 (US)
(72) Inventor: Brandt, David D., New Berlin WI 53146 (US); Baran, Michael S., Milwaukee WI 53207 (US)
(74) Representative: Jung HML

(57) **Abstract**

A system is provided for sensing data and for conveying the data to a network via an RFID tag. The sensed data may be provided as simply two-state single-bit data or as multi-bit data converted from analog values. The sensor used in the system alters an RFID tag address to include one or more bits of data derived from the sensor signal. A reader may then prompt or interrogate the RFID tag and obtain both the unique identification of the sensor as well as the sensed data as one or more bits in the address. The reader may then convert the data to a network message and place the message on a conventional network for interpretation used by remote devices.

## Description

### BACKGROUND

The present invention relates generally to the field of sensors and sensing devices. More particularly, the invention relates to a sensing device that can be networked via a radio frequency (RF) connection and convey sensed data by the change in one or more components of a radio frequency identification (RFID) address.

Many applications exist in industrial and other contexts for sensors. In industrial automation applications, for example, such sensors are used to detect a wide range of values and parameters that are used for monitoring and control of machines, machine systems, processes and the like. For example, sensors used in industry may detect such parameters as the presence or absence of an article, temperature, flow rate, the position of a part or machine element, sizes and dimensions, to mention only a few. Based upon such sensed parameters, decisions may be made, such as for starting or stopping certain processes, mechanical components, and the like. A motor, for example, may be started and stopped based upon a fluid level or the presence of an article to be moved. Similarly, in conveyor applications, based upon a package identification, size, or destination, a gate may be moved from one position to another to properly direct the article to an end location.

A challenge in applying sensors in industry, and in virtually any application, is the need to communicate signals from the sensor to other equipment that may be used to control the process. In many applications, the decisions required for control of the process based upon the sensed signals are made at a location remote from the sensor. Accordingly, a network connection is often required extending between the sensor and the networked components. However, network cabling is often expensive to install, and may pose difficulties in certain applications, particularly where the sensing location is somewhat difficult to access. Moreover, certain sensing locations pose difficulties for wired connections, including situations where there is a significant lack of space for the sensor or the wiring, or in harsh environments where wire entry would best be avoided, or for low cost sensing points that may not support the additional cost of wiring, and mobile components where a tether or wire are simply unworkable.

Wireless sensors have been developed to accommodate such situations. However, conventional wireless sensors generally include relatively expensive circuitry whose complexity may negate the other benefits offered by the wireless nature of the sensor. That is, sensing systems that operate on a wireless basis may include complex networking interfaces configured to monitor networks and to respond to queries in a relatively complex and programmed way.

There is a need for improved sensing systems that can be applied wirelessly to communicate signals to network components, but that avoid the need for complex data conversion and transmission. There is a particular need for sensors that can be used in a range of applications for sensing simple signals such as "on" and "off" (single-bit data), or more complex parameters and values.

### BRIEF DESCRIPTION

The present invention provides a novel sensing approach designed to respond to such needs. The sensor may be based upon any conventional sensing device, including contact and non-contact sensors, various readers, presence sensors, thermometers, thermocouples, and even mechanical limit switches. The sensing system converts the sensed signal to a portion of an RFID tag address. The RFID tag address may then be queried and accessed by a simple RFID reader. Because the sensed data is effectively "embedded" in the RFIF tag address, both the tag identification and the sensed data may be very simply accessed without resort to complex protocols and so forth.

The inventive system may be applied in a range of settings, including in industrial, commercial, material handling, and any other application where sensed data is to be conveyed to a network. The tag address may include one or more bits that can be encoded to transmit the data to the RFID reader. Moreover, the system may be employed in settings where other RFID information are read routinely, thus creating "universal" RFID sensing and reporting systems.

### DRAWINGS

These and other features, aspects, and advantages of the present invention will become better understood when the following detailed description is read with reference to the accompanying drawings in which like characters represent like parts throughout the drawings, wherein:

FIG. 1 is a diagrammatical representation of an RF networked sensor system in accordance with aspects of the present technique;

FIG. 2 is a diagram of an exemplary data bit stream for eight-bit data having one bit reserved for sensed data;

FIG. 3 is a diagrammatical representation of a passive RFID tag sensing approach in accordance with additional aspects of the present technique;

FIG. 4 is a diagrammatical representation of a multi-data bit RFID tag sensing system wherein analog data may be converted to digital data for conveyance to a network as part of a reserved portion of an RFID tag address; and

FIG. 5 is a diagram of an exemplary bit stream including a sensor ID portion and a multi-bit digitized data portion.

### DETAILED DESCRIPTION

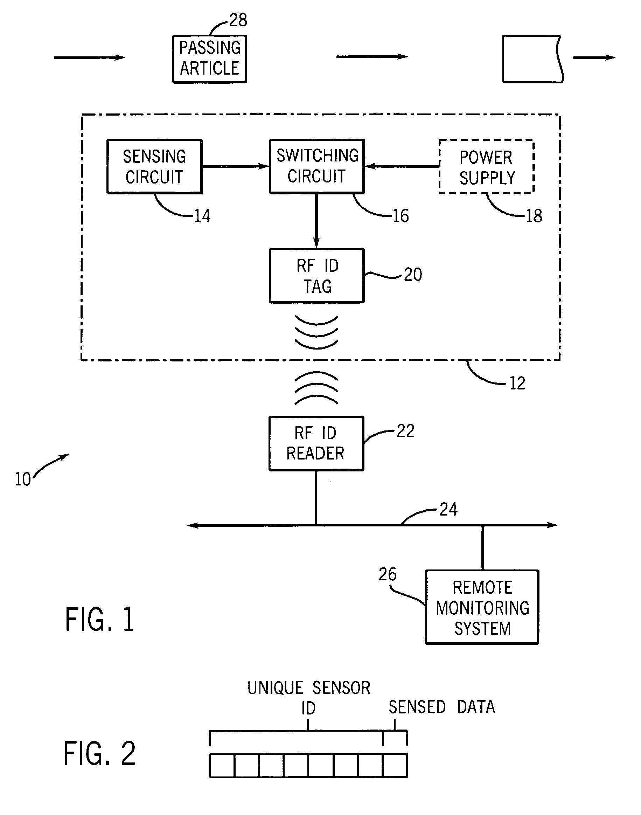

Turning now to the drawings and referring first to FIG. 1, an RF networked sensor system is illustrated generally and designated by the reference numeral 10. The sensor system includes an RF-linked sensor 12 that is designed to sense a parameter of interest, and to modify an RFID tag address based upon the sensed parameter. It should be noted that the RF-linked sensor may be designed for use in any of a wide range of settings, including industrial automation settings, commercial settings, process control settings and so forth. The sensor may be designed for stand-alone use, or in conjunction with other locally-positioned and even integrated circuitry to provide size-efficient packages that may include few or no moving parts. Certain of the functional circuitry making up the RF-linked sensor 12 are illustrated in FIG. 1. These generally will include a sensing circuit 14, a switching circuit 16, a power supply 18, and an RFID tag 20.

The sensing circuit 14 will typically be adapted to detect one or more parameters of interest that will ultimately be conveyed in a raw or modified form to a network. The particular configuration of the sensing circuit will, of course, vary depending upon the nature of the parameter sensed, the type of signal desired or produced by the sensing circuit, and so forth. In general, the sensing circuit 14 may include any conventional sensing circuit. The sensing circuit may, for example, include electrical or magnetic field sensors, such as proximity sensors, opto and opto-electrical sensors, and mechanical sensors. For example, the sensing circuit 14 may include a simple limit switch or other mechanical device which changes a logical state based upon movement. A signal produced by the sensing circuit 14 is output to switching circuit 16. The switching circuit may include a solid state switch or other logical device that effectively changes a bit or a plurality of bits in an RFID tag address. Where necessary, a power supply 18, which may include an integrated power source, may be provided for operation of the switching circuit 16, the sensing circuit 14, or both. Such integrated power sources might include batteries, a local dc source, turbine generators, solar voltaic cells, thermoelectric cells, mechanical (e.g., spring) elements, and so forth. Where not required, the power supply 18 may be dispensed with.

The signal sensed by the sensing circuit is converted to a portion of an RFID tag address by the switching circuit 16. In a presently contemplated embodiment, the switching circuit 16 may convert as little as a single bit in the RFID address which would be part of a data bit stream as discussed below. Based upon this address, then, data may be extracted from the RFID-linked sensor.

The sensor 12 further includes an RFID tag 20. As will be appreciated by those skilled in the art, the RFID tag 20 may be a passive or active device that responds to an RF signal from a reader 22 to provide certain data, including its address and, in the present technique, data representative of a sensed signal. In a typical application, the RFID reader will either approach the RF-linked sensor, or the sensor will approach the reader. For example, the sensor may be placed in a generally static location or on a moving part of a machine system. The sensor could also be placed on a moving article itself that is detected and read by the RFID reader. In other applications, both the sensor and the reader may be in fixed positions.

The RFID reader 22 will generally include an antenna tuned to the RF frequency of the tag. Several standard frequencies exist and are being developed in the art, and the RFID reader and tag may conform to any conventional RF frequency or RFID protocol. The reader 22 is also equipped to transmit data via a network 24, such as to a remote monitoring and control system 26. It should be noted that the remote monitoring and control system 26 may generally be located proximate to the location of the RF-linked sensor, or at quite some distance from the sensor. Indeed, the network 24 may convey signals to any remote location, including via additional wireless transmission, or via another network link, such as an intranet, Internet, LAN, WAN, and so forth. In an industrial context, for example, the RFID reader 22 may include encryption hardware and software for formulating messages in accordance with a known protocol, such as the DeviceNet protocol used in many industrial settings. The messages sent by RFID reader 22 are then placed on network media 24 for detection and reading by any device needing the signal in the network, including the remote monitoring and control system 26.

In an exemplary application, the foregoing system may be used as follows. A passing article 28 may be detected by sensing circuit 14, which may be based upon eddy current proximity sensing, optical proximity sensing, or any other available technique. As article 28 passes the sensor, then, a signal is generated indicating the presence of the article. This presence signal is conveyed to the switching circuit 16 which alters a bit in an RFID tag address and programs the RFID tag 20 with this altered address. The address may be read by the RFID reader 22 to provide an indication of the presence of the passing article 28. Once the article is no longer present, the sensing circuit 14 will interrupt the signals to the switching circuit 16, and the address will be returned to the "non-presence" value prior to sensing of the passing article 28.

It should be noted, again, that the sensing circuit 14 may detect any one of a wide range of parameters. For example, techniques such as those described above for the passing article 28 may similarly be used to indicate any binary sensed signal, such as deflector gate position, valve position, or the logical state of any mechanical, electrical or other device.

FIG. 2 illustrates an exemplary bit stream that may make up an exemplary RFID tag address of the type discussed above. An example of FIG. 2, seven bits of an eight-bit word form a unique sensor identification. A single bit of the stream is reserved for sensed data. Data streams of the type illustrated in FIG. 2 are particularly well-suited for presence and other types of binary sensed data. As indicated above, the unique sensor ID bits will typically be unchanged and will permit the network to identify the origin of the sensed signal, whereas the sensed data bit will be changed from a value of zero to a value of one, and vice versa depending upon the sensed signal.

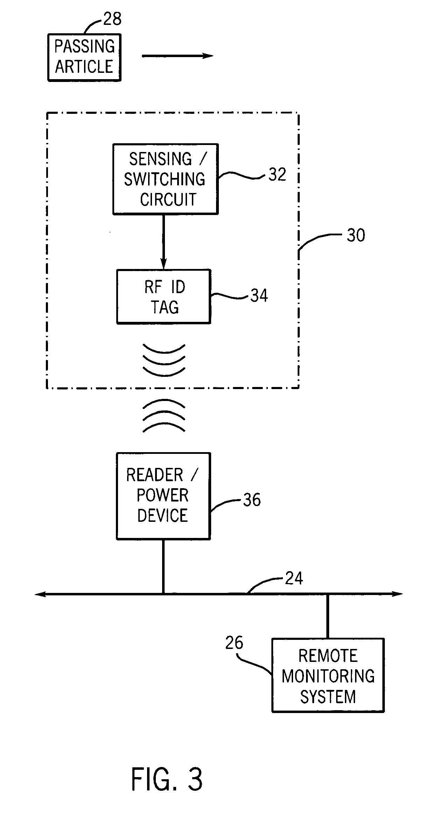

FIG. 3 is a diagram of an alternative sensing system that includes a passive sensor. In the embodiment of FIG. 3, the passive sensor 30 includes a sensing/switching circuit 32 and a passive RFID tag 34. As will be appreciated by those skilled in the art, a passive RFID tag does not require the input of power, but is generally powered by the reader itself. Accordingly, the embodiment of FIG. 3 includes a reader/power device 36 which provides a wireless signal capable of both powering the sensing/switching circuit 32 as well as the RFID tag 34. Again, however, the sensing circuit will generate an output signal based upon the presence or position of an article, and alter the RFID address of the tag 34. As before, the address is read by the reader/power device 36, and converted to a signal that is applied over the network 24, such as for use by a remote monitoring and control system 26.

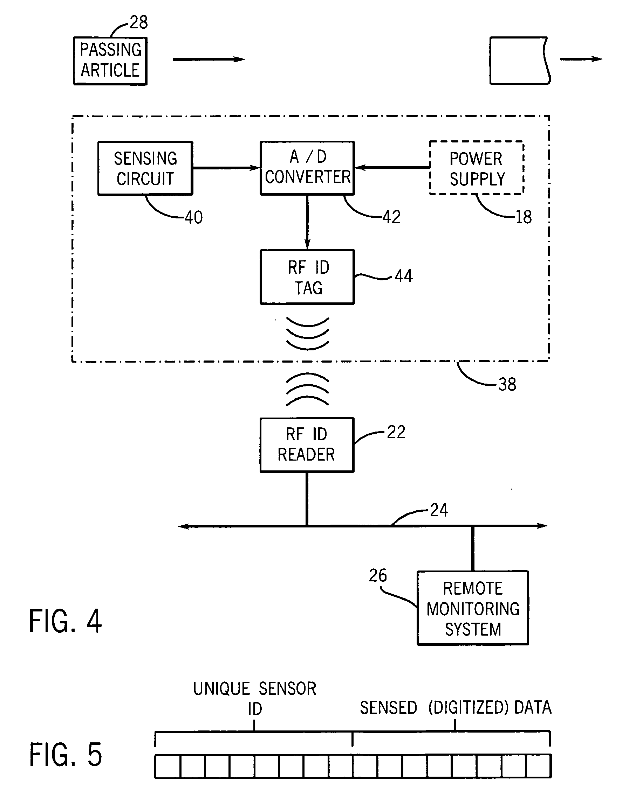

FIG. 4 represents a further alternative embodiment in which a multi-bit RF-linked sensor 38 is provided for conveying more complex sensed data via an RF link. As illustrated in FIG. 4, the sensor 38 will include a sensing circuit 40 which may generally be an analog sensing circuit capable of generating a signal that is a more complex (i.e. non-binary) value. Many such sensors may be employed, such as sensors for indicating pressures, temperatures, or any other parameters having more than two values. Where the sensing circuit 40 produces analog output, the output is provided to an analog-to-digital converter 42. The dynamic range of the analog-to-digital converter 42 will typically be selected in conjunction with the number of bits available in the sensed or digitized data portion of an RFID tag address. The analog-to-digital converter 42 may be supplemented by a switching or programming circuit of the type discussed above with reference to FIG. 1. It should be noted that certain sensors may themselves produce a multi-bit output (e.g., position encoders) that may alleviate the need for separate analog-to-digital conversion. Again, where necessary, a power supply 18 may be provided for operation of both the sensing circuit 40 and the analog-to-digital converter 42. The RFID tag 44, then, is programmed to provide a bit stream when prompted by the RFID reader 22 that will include both the multi-bit unique sensor identification, as well as multi-bit digitized data. As before, the RFID reader 22 is designed to place the data, or a message derived from the data, on network media 24 for use by additional components, such as remote monitoring and control system 26.

FIG. 5 represents an exemplary data bit stream that might be output by the RFID tag 44 as a data-containing address. In the embodiment illustrated in FIG. 5, an eight-bit unique sensor ID portion is followed by an eight-bit sensed or digitized data portion. Again, the sensed or digitized data portion may be altered by the circuitry of the sensor, but is read as part of the RFID tag address interpreted by the reader for use by the network.

While only certain features of the invention have been illustrated and described herein, many modifications and changes will occur to those skilled in the art. It is, therefore, to be understood that the appended claims are intended to cover all such modifications and changes as fall within the true spirit of the invention.

In summary of the invention a system is provided for sensing data and for conveying the data to a network via an RFID tag. The sensed data may be provided as simply two-state single-bit data or as multi-bit data converted from analog values. The sensor used in the system alters an RFID tag address to include one or more bits of data derived from the sensor signal. A reader may then prompt or interrogate the RFID tag and obtain both the unique identification of the sensor as well as the sensed data as one or more bits in the address. The reader may then convert the data to a network message and place the message on a conventional network for interpretation used by remote devices.

## Claims

1. A wireless sensor system comprising:
a sensing module including a sensor for detecting a parameter of interest, and a radio-frequency tag coupled to the sensor and having a modifiable address, the address encoding fixed data for identifying the sensor and modifiable parameter data changed based upon detection of the parameter of interest.

2. The system of claim 1, wherein the sensing module is configured to receive external power for operation of the sensor and for changing the modifiable parameter data of the tag.

3. The system of claim 1 or 2, wherein the sensing module includes an integrated power source to provide power for operation of the sensor and for changing the modifiable parameter data of the tag.

4. The system of claim 1, 2 or 3, wherein the sensor is a binary state sensor, and the tag includes a single bit changeable to indicate a binary state sensed by the sensor.

5. The system of claim 1, 2 or 3, wherein the sensor is a presence sensor, and therein the binary state is the presence or absence of an object of interest.

6. The system of one of claims 1 to 5, wherein the tag includes a plurality of bits changeable to indicate a parameter value.

7. The system of claim 6, wherein the sensing module includes an analog-to-digital converter for converting signals representative of the detected parameter of interest to digital values encoded by the modifiable parameter data.

8. A wireless sensing method comprising:
sensing a parameter of interest via a sensor;
modifying a modifiable portion of a radio-frequency tag address by changing parameter data based upon detection of the parameter of interest, the address including a fixed portion identifying the sensor.

9. The method of claim 8, further comprising reading the tag address including the fixed portion and the modifiable portion via a radio-frequency reader.

10. The method of claim 8 or 9, further comprising converting an analog sensed signal to a digital value and encoding the digital value in multiple bits of the modifiable portion of the tag address.

11. The method of claim 8, 9, 10, further comprising receiving external power for the sensing and modifying steps from a monitored machine system.

12. The method of one of claims 8 to 11 powering the sensor via an integrated power source.
